# EUROPEAN PATENT APPLICATION

(11) **EP 3 330 603 A1**
(43) Date of publication of application: **06.06.2018**
(21) Application number: 17191572.1
(22) Date of filing: 18.09.2017
(51) Int. Cl.: F21V 8/00

(54) **LIGHT GUIDE STRUCTURE AND ELECTRONIC APPARATUS HAVING THE SAME**

(30) Priority: 30.11.2016 CN 201621308159 U
(71) Applicant: Omron Corporation, Kyoto-shi, Kyoto 600-8530 (JP)
(72) Inventor: FU, Hong Yu, Shanghai, 201206 (CN); WEI, Aimei, Shanghai, 201206 (CN); LI, Si Yin, Shanghai, 201206 (CN)
(74) Representative: Becker Kurig Straus

(57) **Abstract**

The invention provides a light guide structure and an electronic apparatus having the light guide structure. The light guide structure includes: a body, having a bottom surface, a circumferential surface, and at least one inclined surface, wherein: the bottom surface faces toward a light source and has a light incident surface, the circumferential surface and the at least one inclined surface are light emitting surfaces, and microstructures are disposed on the at least one inclined surface. In addition to having the circumferential surface for reflecting light, the light guide structure of the invention further includes the at least one inclined surface reflecting light and disposed with the microstructures.

## Description

### BACKGROUND OF THE INVENTION

### 1. Field of the Invention

The invention relates to a light source, and particularly relates to a light guide structure and an electronic apparatus having the light guide structure.

### 2. Description of Related Art

Light emitting diodes (LEDs) are also referred to as the fourth-generation light source. As the LEDs have the characteristics of saving energy, being environmental friendly, being safe, having a longer life span, consuming less power, generating less heat, having higher brightness, being water and shock resistant, having a smaller size, being easy to dim, generating a more focused light beam, and being easy to maintain, LEDs have been broadly used in various fields such as indicator lighting, display, decoration, backlight light sources, general illumination, and the like.

However, LEDs are surface mounted devices (SMDs) that are located on an attaching surface of the substrate. Therefore, an LED light source is normally internally disposed deep in a product, and a display effect on the appearance is limited. Thus, a structural device such as a light guide column is required.

It should be noted that the introduction to the technical background is only provided to more clearly and comprehensively describe the technical solution of the invention and facilitate the understanding of people skilled in the art. The above technical solutions shall not be considered as well-known to people skilled in the art simply because the technical solutions are described in the section of Description of Related Art of the invention.

### SUMMARY OF THE INVENTION

### Technical Problem

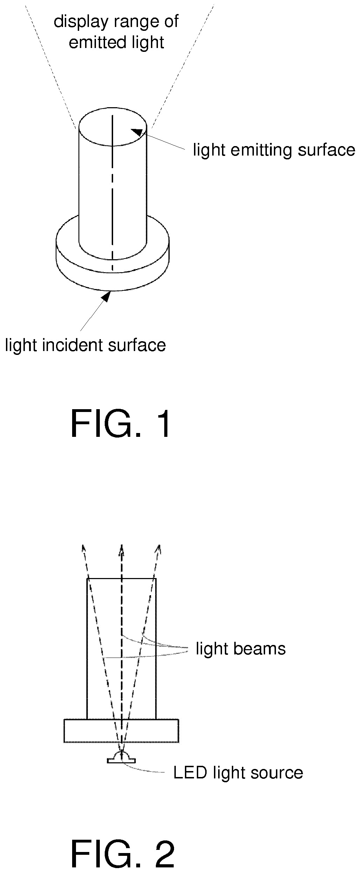

It is found that, while a conventional light guide column is capable of effectively guiding light, such light guide column is incapable for light diffusion. In other words, a display angle of a light source is limited. FIG. 1 is an example of a conventional light guide column. As shown in FIG. 1, the light guide column is a column-like structure having only one surface as light incident surface and only one surface as light emitting surface. FIG. 2 is a schematic view illustrating a visible range of the light guide column of FIG. 1. As shown in FIG. 2, a display range of light emitted from the conventional light guide column only covers a top part of the conventional light guide column, so a visible range is very limited.

### Solution to Problem

Accordingly, the invention provides a light guide structure and an electronic apparatus having the light guide structure.

According to a first aspect of an embodiment of the invention, a light guide structure is provided. The light guide structure includes: a body, having a bottom surface, a circumferential surface, and at least one inclined surface, wherein: the bottom surface faces toward a light source and has a light incident surface, the circumferential surface and the at least one inclined surface are light emitting surfaces, and microstructures are disposed on the at least one inclined surface.

According to a second aspect of an embodiment of the invention, a light guide structure is provided. The light guide structure includes: a support, having a first surface and a second surface, wherein the first surface faces toward a light source and has a light incident surface and the second surface faces away from the light source and is a light emitting surface; and a body, disposed on the second surface of the support and having a circumferential surface and at least one inclined surface, wherein the circumferential surface and the at least one inclined surface are light emitting surfaces, and microstructures are disposed on the at least one inclined surface.

According to a third aspect of the invention, an electronic apparatus is provided. The electronic apparatus has a circuit board and a light source disposed on the circuit board. In addition, the light guide structure according to the first or second aspect is further disposed on the circuit board to transmit light emitted by the light source.

### Technical Effects

In addition to having the circumferential surface for reflecting light, the light guide structure according to the embodiments of the invention further includes the at least one inclined surface disposed with the microstructures and configured to reflect light. Thus, the light transmission and the light diffusion are enabled, and the light utilization efficiency is facilitated.

Specific embodiments of the invention are disclosed in detail with reference to the following descriptions and the accompanying drawings. The descriptions clearly describe examples in which the principle of the invention is applicable. However, it should be understood that the scope of the embodiments of the invention shall not be limited thereto. The embodiments of the invention may cover various modifications, changes, and equivalents without departing from the spirit and terms of the annexed claims.

The description(s) for an embodiment and/or a disclosed feature(s) may be applied in one or more embodiments in an identical or similar way, combined with a feature in another embodiment, or replace a feature in another embodiment.

It should be noted that, throughout the text, terms such as "comprise/include" refer to the presence of a feature, an assembly, a step, or a component, but do not exclude the presence or addition of another feature, another assembly, another step or another component.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view illustrating an example of a conventional light guide column.
FIG. 2 is a schematic view illustrating a visible range of the light guide column shown in FIG. 1.
FIG. 3 is a schematic view illustrating an example of a light guide structure according to Embodiment 1.
FIG. 4 is a side view illustrating the light guide structure shown in FIG. 3.
FIG. 5 is a schematic view illustrating an example of microstructures.
FIG. 6 is a schematic view illustrating another example of the microstructures.
FIG. 7 is a schematic view illustrating a light incident surface, light emitting surfaces, and a display range of emitted light of the light guide structure shown in FIG. 3.
FIG. 8 is a schematic view illustrating another example of a light guide structure according to Embodiment 1.
FIG. 9 is a side view illustrating the light guide structure shown in FIG. 8.
FIG. 10 is a schematic view illustrating an alternative example of the light guide structure shown in FIG. 8.
FIG. 11 is a schematic view illustrating a light incident surface, light emitting surfaces, and a display range of emitted light of the light guide structure shown in FIG. 8.
FIG. 12 is a schematic view illustrating a transmission direction of light of the light guide structure shown in FIG. 8.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In the following, the embodiments of the invention will be described with reference to the accompanying drawings.

### Embodiment 1

The embodiment provides a light guide structure.

In the embodiment, the light guide structure has a support and a body. The support has a first surface and a second surface. The first surface faces toward a light source and has a light incident surface. The second surface faces away from the light source and is a light emitting surface. The body is disposed on the second surface of the support and has a circumferential surface and at least one inclined surface. The circumferential surface and the at least one inclined surface are light emitting surfaces. In addition, microstructures are disposed on the at least one inclined surface.

In the embodiment, by disposing the support, the inclined surface, and the microstructures, the light reflection and the light refraction when light passes through are increased. Thus, not only the diffusion of light can be attained, but the transmission of light can also be accomplished, so the light utilization efficiency is facilitated.

In the following, examples in which the light guide structure includes one inclined surface and two inclined surfaces are provided in the following to describe the light guide structure of the embodiment with reference to the accompanying drawings.

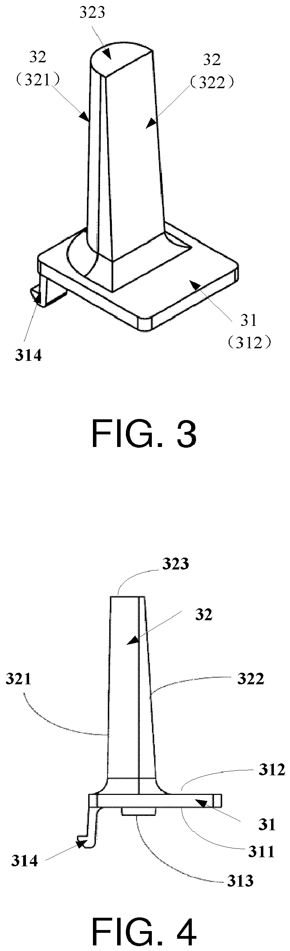

FIG. 3 is a principal view illustrating a light guide structure having one inclined surface. FIG. 4 is a side view illustrating the light guide structure shown in FIG. 3. As shown in FIGs. 3 and 4, the light guide structure has a support 31 and a body 32. The support 31 has a first surface 311 and a second surface 312. The first surface 311 faces toward a light source (not shown) and has a light incident surface 313. The second surface 312 faces away from the light source and is a light emitting surface. The body 32 is disposed on the second surface 312 of the support 31, and has a circumferential surface 321, an inclined surface 322, and a top surface 323. The top surface 323 is connected with the circumferential surface 321 and the inclined surface 322. The circumferential surface 321, the inclined surface 322, and the top surface 323 are light emitting surfaces. In addition, microstructures are disposed on the inclined surface 322 and the top surface 323.

In the embodiment, the circumferential surface 321 may be a curved surface, and the curved surface may be a matte surface. Accordingly, the diffused reflection of light is achieved.

In the embodiment, the inclined surface 322 may be a reflective surface. Since the microstructures are disposed on the inclined surface 322, the inclined surface 322 may also serve as a refractive surface. Therefore, a light transmission path is altered, and the light reflection and the light refraction are achieved.

In the embodiment, the top surface 323 is optional. In another embodiment, the top surface 323 may be omitted and the circumferential surface 321 and the inclined surface 322 are directly connected to each other.

In the embodiment, the light guide structure may be a column-like structure. Accordingly, the transmission of light is achieved.

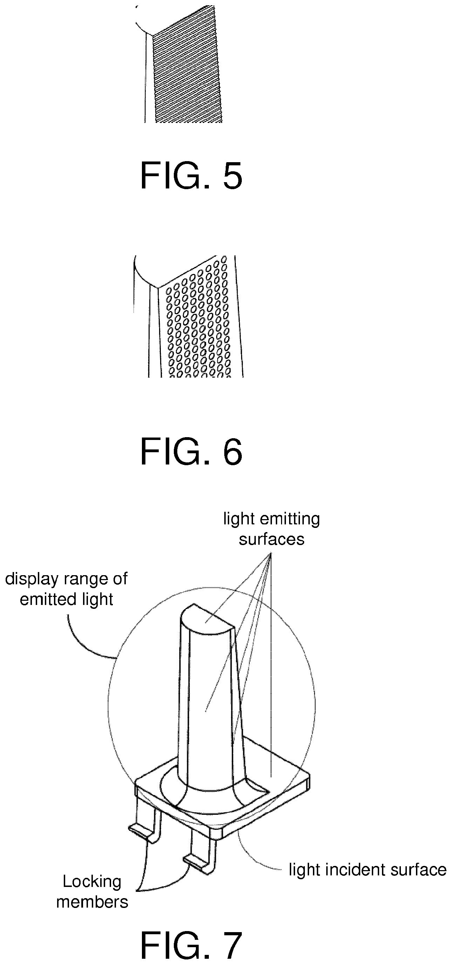

In the embodiment, the microstructures may include tooth-like structures or bump structures. FIGs. 5 and 6 provides examples of two types of microstructures. However, the embodiment is not limited thereto.

In the embodiment, as shown in FIGs. 3 and 4, at least one locking member 314 may be disposed to an end part of the first surface 311 of the support 31 to lock the light guide structure to a substrate. The embodiment does not intend to limit the number of the locking member 314, and the number shall be determined based on specifics of implementation. Moreover, the locking member 314 is also optional. The light guide structure may also be fixed to the substrate in a different way. For example, the light guide structure may also be fixed to the substrate by an adhesive.

In the embodiment, the light incident surface 313 may be a surface protruding in a direction from a body of the support 31 toward the light source, as shown in FIGs. 3 and 4. In other words, the light incident surface 313 is a portion of the first surface 311. Furthermore, compared with rest of the first surface 311, the light incident surface 313 is closer to the light source. Therefore, the alignment with the location of the light source is enabled, the loss of light through transmission in the air is reduced, and the light utilization efficiency is facilitated. FIGs. 3 and 4 are provided herein only for an illustrative purpose. The light incident surface 313 and the first surface 311 may also located on the same horizontal plane.

FIG. 7 is a schematic view illustrating the light incident surface, the light emitting surfaces, and a display range of emitted light of the light guide structure shown in FIG. 3. As shown in FIG. 7, by arranging all the side surfaces (the circumferential surface 321 and the inclined surface 322) and the top surface (the top surface 323 of the body and the second surface 312 of the support) of the light guide structure to be the light emitting surfaces and disposing the microstructures on the inclined surface 322 and the top surface 323 of the body, the light reflection and the light refraction when light passes through are increased. Thus, not only the diffusion of light can be achieved, but the transmission of light can also be accomplished, and the light utilization efficiency is facilitated.

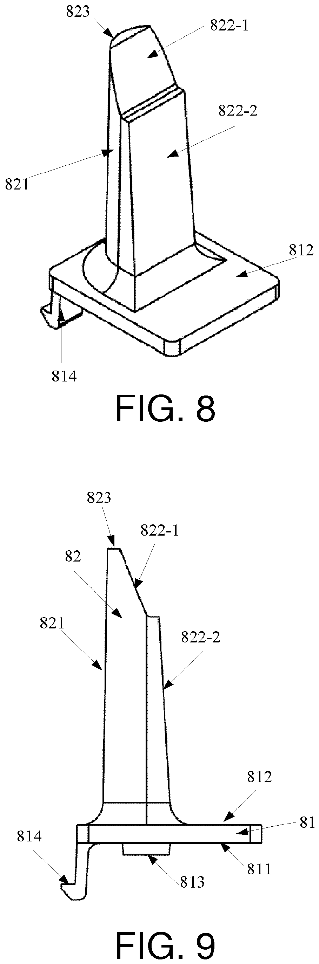

FIG. 8 is a principal view illustrating a light guide structure having two inclined surfaces. FIG. 9 is a side view illustrating the light guide structure shown in FIG. 8. As shown in FIGs. 8 and 9, the light guide structure has a support 81 and a body 82. The support 81 has a first surface 811 and a second surface 812. The first surface 811 faces toward a light source (not shown) and has a light incident surface 813. The second surface 812 faces away from the light source and is a light emitting surface. The body 82 is disposed on the second surface 812 of the support 81, and has a circumferential surface 821, two inclined surfaces 822-1 and 822-2, and a top surface 823. The top surface 823, the circumferential surface 821, and the inclined surface 822-1 are connected with each other, In addition, the circumferential surface 821, the inclined surfaces 822-1 and 822-2, and the top surface 823 are all light emitting surfaces. In addition, microstructures are disposed on the inclined surfaces 822-1 and 822-2 and the top surface 823.

In the embodiment, implementations and functions of the circumferential surface 821, the inclined surfaces 822-1 and 822-2, the top surface 823, and the light incident surface 813 are the same as those of the circumferential surface 321, the inclined surface 322, the top surface 323, and the light incident surface 313. Thus, details in these regards will not be repeated in the following.

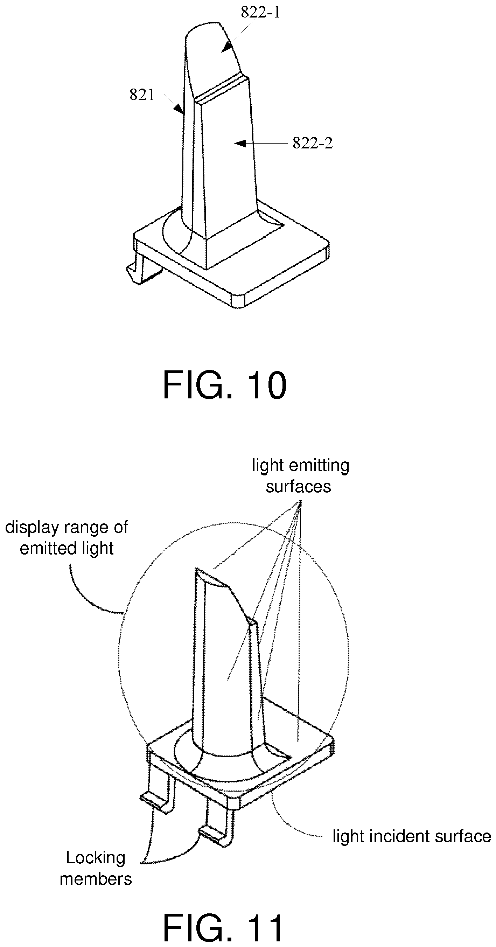

In the embodiment, the top surface 823 is also optional. FIG. 10 schematically illustrates a light guide structure without the top surface 823. The microstructures may include tooth-like structures or bump structures, as shown in FIGs. 5 and 6. At least one locking member 814 may also be disposed to an end part of a first surface of the support 81 to lock the light guide structure to the substrate. Implementations and functions of the locking member 814 are similar to those of the locking member 314 of the light guide structure shown in FIGs. 3 and 4. Therefore, details in these regards will not be repeated in the following.

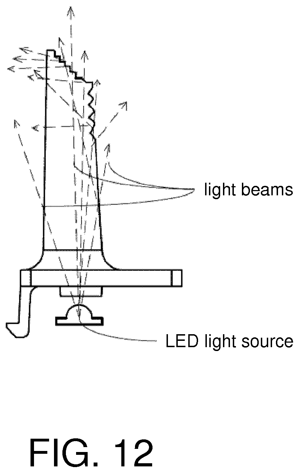

FIG. 11 is a schematic view illustrating the light incident surface, the light emitting surfaces, and a display range of emitted light of the light guide structure shown in FIG. 8, and FIG. 12 is a schematic view illustrating a transmission direction of light of the light guide structure shown in FIG. 8. As shown in FIGs. 11 and 12, by arranging all the side surfaces (the circumferential surface 821 and the inclined surfaces 822-1 and 822-2) and the top surface (the top surface 823 of the body and the second surface 812 of the support) of the light guide structure to be the light emitting surfaces and disposing the microstructures on the inclined surfaces 822-1 and 822-2 and the top surface 823 of the body, the light reflection and the light refraction when light passes through are increased. Thus, not only the diffusion of light can be achieved, but the transmission of light can also be accomplished, and the light utilization efficiency is facilitated.

### Embodiment 2

The embodiment provides a light guide structure.

In Embodiment 1, the light guide structure is described with an example having the support and the body. However, the embodiment is not limited thereto. In an example of the embodiment, the support may be optional.

In the embodiment, the light guide structure has a body. The body has a bottom surface, a circumferential surface, and at least one inclined surface. The bottom surface faces toward a light source and has a light incident surface. The circumferential surface and the at least one inclined surface are light emitting surfaces. Moreover, microstructures are disposed on the at least one inclined surface.

In the embodiment, implementations and functions of the circumferential surface and the at least one inclined surface are the same as the circumferential surface 321 or 821 and the inclined surface 322, 822-1, or 822-2 of the light guide structure shown in FIGs. 3 and 4 and 8 and 9. Therefore, details in these regards will not be repeated in the following.

In the embodiment, implementations and functions of the bottom surface and the light incident surface are the same as those of the first surface 311 or 811 and the light incident surface 313 or 813 of the support of the light guide structure shown in FIGs. 3 and 4 and 8 and 9. Therefore, details in these regards will not be repeated in the following. In addition, the light incident surface is a portion of the bottom surface, and compared with rest of the bottom surface, the light incident surface is closer to the light source.

In the embodiment, similarly, the light guide structure may also include the top surface. The implementations and functions of the top surface of the light guide structure may also be referred to those of the top surface 323 or 823 of FIGs. 3 and 4 and 8 and 9. Therefore, details in these regards will not be repeated in the following.

In the embodiment, by disposing the inclined surface and the microstructures, the light reflection and the light refraction when light passes through are increased. Thus, not only the diffusion of light can be achieved, but the transmission of light can also be accomplished, so the light utilization efficiency is facilitated.

### Embodiment 3

The embodiment provides an electronic apparatus.

In the embodiment, the electronic apparatus includes a circuit board. A light source is disposed on the circuit board. In addition, a light guide structure is further disposed on the circuit board to transmit light emitted by the light source.

In the embodiment, the structure of Embodiment 1 or Embodiment 2 may be adopted as the light guide structure. By disposing the inclined surface and the microstructures, the light reflection and the light refraction when light passes through are increased. Thus, not only the diffusion of light can be achieved, but also the transmission of light can be accomplished, so the light utilization efficiency is facilitated.

In the embodiment, the electronic apparatus may be a power source for an industrial purpose. However, the embodiment is not limited thereto. The electronic apparatus may also be other electronic apparatuses requiring an LED light source and requiring a light guide column to guide the light emitted by the LED light source. Thus, details in these respects will not be repeated in the following.

In the embodiment, other components and parts of the electronic apparatus may be referred to the conventional technologies, and thus will not be discussed in detail in the following.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A light guide structure, **characterized in that** the light guide structure comprises:
a body (32, 82), having a bottom surface (311, 811), a circumferential surface (321, 821), and at least one inclined surface (322, 822-1, 822-2), wherein:
the bottom surface faces toward a light source and has a light incident surface (313, 813),
the circumferential surface and the at least one inclined surface are light emitting surfaces, and
microstructures are disposed on the at least one inclined surface.

2. A light guide structure, **characterized in that** the light guide structure comprises:
a support (31, 81), having a first surface (311, 811) and a second surface (312, 812), wherein the first surface faces toward a light source and has a light incident surface (313, 813) and the second surface faces away from the light source and is a light emitting surface; and
a body (32, 82), disposed on the second surface (312, 812) of the support and having a circumferential surface (321, 821) and at least one inclined surface (322, 822-1, 822-2), wherein the circumferential surface and the at least one inclined surface are light emitting surfaces, and microstructures are disposed on the at least one inclined surface.

3. The light guide structure as claimed in claim 1 or 2, wherein:
the body (32, 82) further comprises a top surface (323, 823) connected with the circumferential surface (321, 821) and one said inclined surface (322, 822-1, 822-2), and microstructures are also disposed on the top surface.

4. The light guide structure as claimed in claim 1 or 2, wherein:
the microstructures comprise tooth-like structures or bump structures.

5. The light guide structure as claimed in claim 1 or 2, wherein:
the at least one inclined surface (322, 822-1, 822-2) comprises two inclined surfaces (822-1, 822-2), and the at least one inclined surface is a reflective surface.

6. The light guide structure as claimed in claim 1 or 2, wherein:
the circumferential surface (321, 821) is a curved surface, and the curved surface is a matte surface.

7. The light guide structure as claimed in claim 2, wherein at least one locking member (314, 814) is disposed to an end part of the first surface (311, 811) of the support (31, 81).

8. The light guide structure as claimed in claim 1, wherein the light incident surface (313, 813) is a portion of the bottom surface (311,811), and compared with rest of the bottom surface, the light incident surface is closer to the light source.

9. The light guide structure as claimed in claim 2, wherein the light incident surface (313, 813) is a portion of the first surface (311, 811), and compared with rest of the first surface, the light incident surface is closer to the light source.

10. An electronic apparatus, having a circuit board and a light source disposed on the circuit board, wherein the light guide structure according to any one of claims 1 to 9 is further disposed on the circuit board to transmit light emitted by the light source.
